# EUROPEAN PATENT SPECIFICATION

(11) **EP 2 618 998 B1**
(45) Date of publication and mention of the grant of the patent: **29.03.2017**
(21) Application number: 11764048.2
(22) Date of filing: 20.09.2011
(51) Int. Cl.: B32B 5/02, B32B 5/16, B32B 27/00, B32B 29/00

(54) **COMPOSITE PANEL HAVING BONDED NONWOVEN AND BIODEGRADABLE RESINOUS-FIBER LAYERS AND METHOD OF CONSTRUCTION THEREOF**
VERBUNDPLATTE MIT GEBONDETEN VLIES- UND BIOLOGISCH ABBAUBAREN HARZFASERSCHICHTEN UND HERSTELLUNGSVERFAHREN DAFÜR
PANNEAU COMPOSITE DOTÉ DE COUCHES DE FIBRES RÉSINEUSES COLLÉES, NON TISSÉES ET BIODÉGRADABLES ET SON PROCÉDÉ DE CONSTRUCTION

(30) Priority: 20.09.2010 US 384521 P
(43) Date of publication of application: 31.07.2013
(73) Proprietor: Federal-Mogul Powertrain, Inc., Southfield, MI 48033 (US)
(72) Inventor: POPPE, Clayton, Ithaca, NY 14850 (US); DALY, Marc, Ithaca, NY 14850 (US); ARD, Katherine, Dryden, NY 13053 (US)
(74) Representative: Lessard, Jason Donat
(86) International application number: PCT/US2011/052334
(87) International publication number: WO 2012/040189

(56) References cited:
- WO-A1-2008/086458

## Description

### BACKGROUND OF THE INVENTION

### 1. Technical Field

This invention relates generally to multilayer panels and to their methods of construction, and more particularly to acoustic, thermal and/or structural panels constructed at least partially from green waste material constituents and biodegradable polymeric compositions containing protein in combination with green strengthening agents.

### 2. Related Art

In order to reduce the costs associated with manufacturing nonwoven fabrics and materials, and to minimize potentially negative affects on the environment, many consumer products are constructed using recycled constituents. For example, automobile manufacturers in the United States use recycled materials to construct nonwoven fabrics and materials having various uses, including sound absorption and/or insulation materials. Some reclaimed or recycled materials used to construct sound absorbing vehicle panels include fabric shoddy, such as, for example, cotton, polyester, nylon, or blends of recycled fabric fibers.

Cotton shoddy is made from virgin or recycled fabric scraps that are combined and needled to form a nonwoven fabric. Another product constructed from recycled standard cardboard papers or fibers, used on a limited basis to absorb oils, is Ecco paper. In the process of constructing Ecco paper, the standard cardboard fibers are broken down using conventional wet recycling techniques, wherein constituent binder ingredients of the recycled cardboard are flushed into a waste stream, and the remaining fibers are combined with various additives.

U.S. commercial establishments and consumer product manufacturers, for example, automotive component parts and original equipment manufacturers, receive numerous shipments from various Asian countries, such as China and Korea, for example, in boxes or containers constructed of low grade "Asian cardboard." Asian cardboard has constituents of very short, very fine fibers from previously recycled pine cardboard, as well as bamboo and rice fibers. As such, attempts to recycle Asian cardboard into paper, cardboard or other structural panel products through the paper mill process has been met with failure, with the very fine constituents of the Asian cardboard being flushed through the screens or mesh used to carry pulp in the paper/cardboard manufacturing process into the environment via the resulting waste stream of the recycling process. In addition, the fine constituents of Asian cardboard provide further difficulty in fabricating a "high loft, low density" end product, due to the inherent compaction of the fine fibers during processing, aside from their being flushed into the waste stream, as mentioned. Accordingly, for at least these reasons, Asian cardboard is typically considered to be waste product, and thus, is either sorted from standard cardboard at a relatively high labor cost and sent to landfills (during sorting, the Asian cardboard is readily identifiable from standard cardboard due to its relatively flimsy structure and its pale brown or greenish color) or the entire bale containing the Asian cardboard along with ordinarily recyclable materials is scrapped if there is estimated to be more than about 5% Asian cardboard in the bale, also with a relatively high cost to both the product manufacturer and the environment.

Further concerns regarding polluting and sustaining the environment are rapidly rising. Extensive research efforts are being directed to develop environment-friendly and fully sustainable "green" polymers, resins and composites that do not use petroleum and wood as the primary feed stocks, but are instead based on sustainable resources, such as plants. Such plant-based green materials are typically biodegradable and can thus be easily disposed of or composted at the end of their useful life without harming the environment. Fibers such as jute, flax, linen, hemp, bamboo, etc., which have been used for many centuries, are not only sustainable but are also annually renewable. Because of their moderate mechanical properties, efforts are being directed toward their use in the reinforcement of plastics and the fabrication of composites for various applications. Such fibers may be used alone, as components of yarns, fabrics or nonwoven mats, or various combinations thereof. Fully green composites fabricated using plant fibers such as jute, flax, linen, hemp, bamboo, kapok, etc., and resins such as modified starches and proteins have already been demonstrated and commercialized. High strength liquid crystalline (LC) cellulose fibers, prepared by spinning a solution of cellulose in phosphoric acid, can impart sufficiently high strength and stiffness to composites to make them useful for structural applications. However, since natural fibers are generally weak compared to high strength fibers such as graphite, aramid, etc., composites containing them typically have relatively poor mechanical properties, although they may be comparable to or better than wood. Thus, such composites are suitable for applications that do not require high mechanical performance, for example, packaging, product casings, housing and automotive panels, etc. Nonetheless these applications represent large markets, so increasing use of composites containing biodegradable natural materials should contribute substantially towards reducing petroleum-based plastic/polymer consumption.

The use of renewable materials from sustainable sources is increasing in a variety of applications. Biocomposites are materials that can be made in nature or produced synthetically, and include some type of naturally occurring material such as natural fibers in their structure. They may be formed through the combination of natural cellulose fibers with other resources such as biopolymers, resins, or binders based on renewable raw materials. Biocomposites can be used for a range of applications, for example: building materials, structural and automotive parts, absorbents, adhesives, bonding agents and degradable polymers. The increasing use of these materials serves to maintain a balance between ecology and economy. The properties of plant fibers can be modified through physical and chemical technologies to improve performance of the final biocomposite. Plant fibers with suitable properties for making biocomposites include, for example, hemp, kenaf, jute, flax, sisal, banana, pineapple, ramie and kapok.

Biopolymers derived from various natural botanical resources, such as protein and starch, have been regarded as alternative materials to petroleum plastics because they are abundant, renewable and inexpensive. The widespread domestic cultivation of soybeans has led a great deal of research into the development of biopolymers derived from their byproducts. Soy protein is an important alternative to petroleum based plastic materials because it is abundant, renewable and inexpensive. Soy proteins, which are complex macromolecular polypeptides containing 20 different amino acids, can be converted into biodegradable plastics. However, soy protein plastics suffer the disadvantages of low strength and high moisture absorption. Accordingly, there remains a need for biodegradable resins and composites thereof.

### SUMMARY OF THE INVENTION

According to one aspect of the invention, there is provided a method of constructing a composite panel as recited in the appended claims.

In accordance with another aspect of the invention, the method includes providing the cardboard as Asian cardboard.

In accordance with another aspect of the invention, the method includes laminating a scrim layer to at least one side of the mat without using nip rolls and maintaining the thickness of the mat as initially produced.

In accordance with another aspect of the invention, the method includes providing the protein as other than a soy protein.

In accordance with another aspect of the invention, the method includes providing the protein as a plant-based protein.

In accordance with another aspect of the invention, the method includes providing the protein as an animal-based protein.

In accordance with another aspect of the invention, the method includes providing the protein as a soy-based protein from a soy protein source.

In accordance with another aspect of the invention, the method includes molding the composite panel to net shape.

In accordance with another aspect of the invention, the method includes forming the composite panel having areas of varying density during the bonding step.

In accordance with another aspect of the invention, the method includes forming the composite panel having areas of varying thickness during the bonding step.

In accordance with another aspect of the invention, the method includes forming the composite panel having a uniform thickness and density.

In accordance with another aspect of the invention, the method includes bonding the mat to the biodegradable polymeric composition using a single stage press under substantially constant pressure.

In accordance with another aspect of the invention, the method includes bonding the mat to the biodegradable polymeric composition using a single stage press under varying pressure.

In accordance with another aspect of the invention, the method includes bonding the mat to the biodegradable polymeric composition using a two stage press under varying pressure.

In accordance with another aspect of the invention, the method includes mixing staple fibers with the cardboard pieces and heat bondable textile fibers to form a substantially homogenous mixture and then forming the web from the mixture.

In accordance with another aspect of the invention, the method includes applying a chemical mixture, including a flame retardant, a biocide and a binder, to at least one surface of the nonwoven mat and maintaining the thickness of the nonwoven mat as initially produced and then drying and curing the nonwoven mat.

According to yet another aspect of the invention, there is provided a composite panel as recited in the appended claims.

In accordance with another aspect of the invention, staple fibers are mixed with the cardboard and heat bondable textile fibers.

In accordance with another aspect of the invention, a chemical mixture, including a flame retardant, a biocide and a binder, are applied, dried and cured to at least one surface of the nonwoven mat.

In accordance with another aspect of the invention, a scrim layer is attached to a side of the mat opposite the biodegradable polymeric composition.

In accordance with another aspect of the invention, the cardboard is Asian cardboard.

In accordance with another aspect of the invention, the protein is other than a soy protein.

In accordance with another aspect of the invention, the protein is a plant-based protein.

In accordance with another aspect of the invention, the protein is an animal-based protein.

In accordance with another aspect of the invention, the protein is a soy-based protein.

In accordance with another aspect of the invention, the composite panel is net shape "as molded".

In accordance with another aspect of the invention, the composite panel has areas of varying density.

In accordance with another aspect of the invention, the composite panel has areas of varying thickness.

In accordance with another aspect of the invention, the composite panel has a uniform thickness and density.

In accordance with another aspect of the invention, the mat is bonded to the biodegradable polymeric composition without an intermediate adhesive component separate from the mat and the biodegradable polymeric composition.

Accordingly, the invention herein provides a laminated composite panel, such as those suitable for use in acoustic, thermal or structural applications, and methods for their construction by recycling, at least in part, cardboard, e.g. Asian cardboard, and bonding it under pressure and temperature to a biodegradable resin composite to create a panel that can be used in a variety of applications, such as acoustical, thermal and/or structural applications.

### BRIEF DESCRIPTION OF THE DRAWINGS

These and other aspects, features and advantages of the present invention will become more readily appreciated when considered in connection with the following detailed description of presently preferred embodiments and best mode, appended claims and accompanying drawings, in which:
Figure 1 is a schematic side view of a composite panel constructed in accordance with one aspect of the invention;
Figure 2 is a partial perspective view of a nonwoven layer of the composite panel of Figure 1;
Figure 3 is a process flow diagram illustrating a method of constructing the nonwoven layer in accordance with another aspect of the invention;
Figure 4 illustrates a process for constructing the composite panel of Figure 1 in accordance with another aspect of the invention;
Figure 5 illustrates a process for constructing a composite panel in accordance with another aspect of the invention;
Figure 5A illustrates the composite panel constructed in accordance with the process of Figure 5;
Figure 6A illustrates a first stage of a process for constructing a composite panel in accordance with yet another aspect of the invention;
Figure 6B illustrates a compressed biodegradable layer after being pressed in the first stage of Figure 6A;
Figure 6C illustrates a second stage of the process of Figure 6A for constructing the composite panel;
Figure 6D illustrates the composite panel constructed in accordance with the process of Figures 6A and 6C; and
Figure 7 is a schematic side view of a composite panel having a carpet layer constructed in accordance with one aspect of the invention.

### DETAILED DESCRIPTION OF PRESENTLY PREFERRED EMBODIMENTS

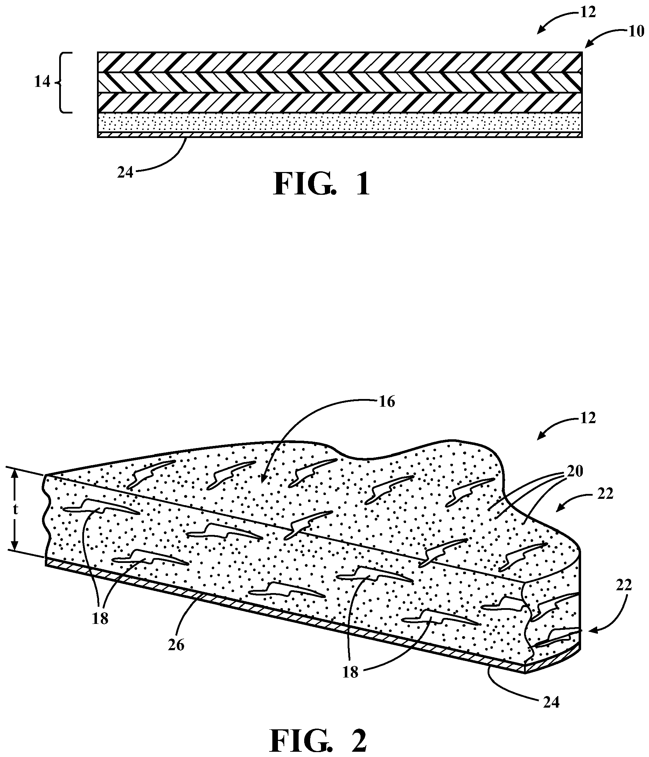

Referring in more detail to the drawings, Figure 1 illustrates a composite member, also referred to as composite panel or composite 10, constructed in accordance with one aspect of the invention. The composite panel 10 includes at least one nonwoven sheet 12 bonded to at least one sheet 14 of a biodegradable polymeric composition. The separate layers 12, 14 are bonded to one another under pressure (P) and temperature, and thus, do not require a separate intermediate adhesive layer to perform the bonding. Accordingly, the sheets 12, 14, in accordance with one aspect of the invention, are bonded to one another without a separate, intermediate bonding layer. The composite panel 10 can be configured for a variety of applications, such as acoustical, thermal and/or structural applications, by way of example and without limitation, and for a variety of industries, such as automotive, light commercial, heavy duty and off highway vehicles, aerospace, rail vehicles, construction, and any other industries requiring a panel having relatively high strength, acoustical and/or thermal properties. In addition, the composite panel 10 is economical in construction and environmentally friendly.

The nonwoven sheet 12, also referred to as nonwoven layer, is preferably constructed having a "high and/or medium loft" (i.e. relatively low density) mat 16, and thus, provides noise damping or attenuation properties, thereby being readily suitable for configuring as an acoustic panel. Further the sheet 12 can be constructed having fire retardant properties, if intended for use in high temperature environments, such as near an exhaust system or within a vehicle engine compartment, for example. The sheet 12 is constructed, at least in part from cardboard 18, e.g., standard cardboard or Asian cardboard; staple fibers, also referred to as filler fibers, and heat-bondable fibers, e.g. low temperature melt polymeric material, which are represented generally at 20 (Figure 2). Further, the sheet 12 illustrated includes a chemical mixture coating 22, including a flame retardant, a biocide and a binder, applied, dried and cured to at least one surface thereof. Further yet, a scrim layer 24, as illustrated, is attached to at least one side of the mat 16, wherein the scrim layer 24 is preferably attached without using a roller or roller, often referred to as nip rolls, such that upon attaching the scrim layer 24 to the mat 16, the mat 16 retains or substantially retains its original high loft thickness as initially produced. Accordingly, the sheet 12 has a low density, "high or medium loft", thereby providing excellent noise attenuation and insulation properties. Further, with the sheet 12 being constructed, at least in part, from post consumer or recycled cardboard 18, particularly Asian cardboard, which till now has generally been considered a waste product, the environment is benefited in that the reclaimed cardboard 18 is kept from being sent to landfills or from being incinerated.

The content of the cardboard, whether standard, mixed or 100% Asian cardboard, is preferably between about 25-99 weight percent of the total web weight, depending on the desired characteristics of the sheet 12 and composite panel 10 being constructed. The Asian cardboard 18 is considered to be a low grade, non-recyclable cardboard due to its being constructed from inferior constituent ingredients, such as low quality recycled fibers, bamboo fibers, jute, rice fibers, and/or other scrap/waste materials. As such, Asian cardboard is typically considered to be a serious non-recyclable contaminant, whether on its own or if bailed or otherwise included in reclaimed post consumer cardboard loads. Accordingly, if Asian cardboard is bailed with standard U.S. cardboard, the entire bail or load is typically considered to be non-recyclable waste. Asian cardboard can be distinguished from higher quality U.S. cardboard by its flimsiness and characteristic pale brown, yellow or greenish color. Accordingly, Asian cardboard is typically separated from higher U.S. quality cardboard, and sent to landfills, burned, or otherwise disposed.

The inability of Asian cardboard to be recycled stems from the constituent ingredients of the inferior fibers used in the construction of the Asian cardboard, which are generally very short and thus very weak. Given the relatively fine size of the fibers and other powdery ingredients in Asian cardboard, if the Asian cardboard is processed in known wet recycling processes along with standard cardboard having fibers of an increased length, the relatively fine ingredients of the Asian cardboard get flushed through the screens and carried into the waste stream and/or plug and otherwise damage the recycling equipment. Accordingly, in accordance with one aspect of the invention, the construction of the sheet 12 is performed in a "dry" process, thereby allowing the inferior Asian cardboard, typically having fibers less in length than about 0.2mm (referred to as "fines"), to be utilized in the manufacture of the sheet 12.

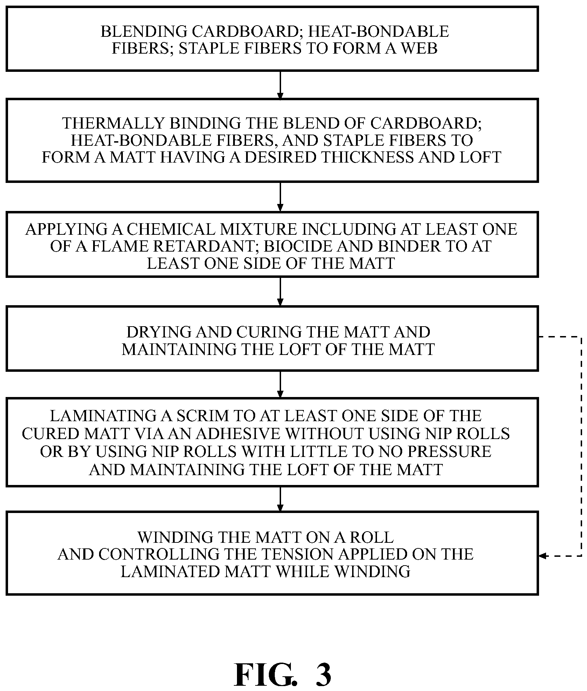

The staple fibers can be provided from any suitable textile material, and the heat bondable fibers can be provided, for example, as a low temperature melt polymeric material, such as fibers of polyethylene, PET or Nylon, and/or thermoplastic bi-component fibers whose outer sheath, such as polypropylene, for example, melts when heated above its melting point. As illustrated in a flow chart in Figure 3, the process for constructing the sheet 12 includes mixing or blending the comminuted cardboard 18, preferably with the staple fibers, and heat-bondable fibers 20 to form a web. The webbing process, which may be performed, for example, on a Rando machine, forms a homogenously mixed fiber/paper mat or web, with the fibers of the cardboard 18 being randomly oriented.

Then, upon forming the web, the web is heated, such as in an oven, to a temperature suitable to melt the heat-bondable fibers 20, (e.g., the melting point of the outer portion of a bi-component low melt fiber may be approximately 110°C - 180°C), thereby thermally bonding the blend of Asian cardboard 18 with the staple fibers and heat-bondable fibers 20. As such, the mat 16 attains a desired thickness t.

Then, upon forming and cooling the mat 16, the chemical mixture 22, including a heat resistant or flame retardant (FR) coating, Ammonium Sulfate, Ammonium Phosphate, or Boric Acid, for example, a biocide and a binder, by way of example and without limitation, SBR with a Tg of +41, can be applied, such as in a spraying process, to at least one side, and preferably to the entire outer surface of the mat 16. The spraying application of the chemical mixture 22 acts to maintain the thickness t of the mat 16, thereby preserving its noise dampening properties. Upon applying the mixture 22, the mixture 22 is the dried and cured to the mat 16.

The resulting coated, nonwoven mat 16 then can have a thin nonwoven fabric or scrim layer 24 attached or bonded to one or both sides thereof. The scrim layer 24 is bonded to the side or sides of the mat 16 using a suitable heat resistant adhesive, shown generally at 26. It is critical that the thickness t of the mat 16 be maintained or substantially maintained while attaching the scrim layer 24 in order to preserve the acoustic and/or noise attenuating properties of the sheet 12. Therefore, the scrim layer 24 is bonded to the mat 16 without using a compressive roller or nip rollers, which would tend to compact or reduce the thickness t of the mat 16, thereby causing it to become increased in density, thereby diminishing its noise attenuating properties.

The present invention provides the biodegradable polymeric composition 14 comprising a protein and a first strengthening agent. In some embodiments, a biodegradable polymeric composition further comprises a second strengthening agent. In some embodiments, the invention provides a resin comprising a biodegradable polymeric composition. In certain embodiments, the invention provides a composite comprising a provided resin. Such biodegradable polymeric compositions, strengthening agents, resins, and composites are described in detail herein, infra.

In other aspects, the present invention provides a method for preparing a composite panel 10 comprising a nonwoven layer and a biodegradable polymeric composition 14 comprising the steps of: preparing an aqueous mixture of a resin comprising a protein and first strengthening agent; coating and/or impregnating a fiber mat 16 with the mixture; heating the impregnated mat 16 to remove water (or otherwise drying the impregnated mat), thereby forming a substantially dry intermediate sheet (also referred to herein as a "prepreg"); and subjecting the intermediate sheet to conditions of temperature and pressure effective to form a composite comprising the biodegradable polymeric composition. Details of these, and other aspects of the invention, are provided herein, infra.

### Definitions

The term "biodegradable" is used herein to mean degradable over time by water and/or enzymes found in nature, without harming the environment.

The term "strengthening agent" is used herein to describe a material whose inclusion in the biodegradable polymeric composition of the present invention results in an improvement in any of the characteristics "stress at maximum load", "fracture stress", "fracture strain", "modulus", and "toughness" measured for a solid article formed by curing of the composition, compared with the corresponding characteristic measured for a cured solid article obtained from a similar composition lacking the strengthening agent.

The term "curing" is used herein to describe subjecting the composition of the present invention to conditions of temperature and pressure effective to form a solid article.

The term "array" is used herein to mean a network structure.

The term "mat" is used herein to mean a collection of raw fibers joined together.

The term "prepreg" is used herein to mean a fiber structure that has been impregnated with a resin prior to curing the composition.

The term "vehicle" as used herein refers to any mechanical structure that transports people, animals, and/or objects, whether motorized or not. In some embodiments, a vehicle is an automobile (e.g., a car or truck). In other embodiments, a vehicle is a train, an aircraft (e.g., airplane, glider, or helicopter), a cart, a wagon, a sled, a ship (e.g, a motorboat, a sailboat, a row boat, etc.), a tanker, or a motorcycle.

### RESIN

In some aspects, the present invention provides a resin comprising a biodegradable polymeric composition comprising a protein and a first strengthening agent. Such resin is made entirely of biodegradable materials. In some embodiments, a resin is made from a renewable source including a yearly renewable source. In some embodiments, no ingredient of the resin is toxic to the human body (i.e., general irritants, toxins or carcinogens). In certain embodiments, a provided resin does not include formaldehyde or urea derived materials.

### Suitable Protein

As generally described above, a provided biodegradable polymeric composition comprises a protein.

Suitable protein for use in a provided composition typically contains about 20 different amino acids, including those that contain reactive groups such as -COOH, -NH2 and -OH groups. Once processed, protein itself can form crosslinks through the -SH
groups present in the amino acid cysteine as well as through the dehydroalanine (DHA) residues formed from alanine by the loss of the α-hydrogen and one of the hydrogens on the methyl group side chain, forming an α,β-unsaturated amino acid. DHA is capable of reacting with lysine and cysteine by forming lysinoalanine and lanthionine crosslinks, respectively. Asparagines and lysine can also react together to form amide type linkages. All these reactions can occur at higher temperatures and under pressure that is employed during curing of the protein. However, the crosslinked protein is very brittle and has low strength.

Without wishing to be bound by a particular theory, it is believed that the protein concentration of a given protein source is directly proportional to the extent of crosslinking (the greater the protein concentration the greater crosslinking of the resin). Greater crosslinking in the resin produces composites with more rigidity and strength. Altering the ratio of protein to plasticizer allows those skilled in the art to select and fine tune the rigidity of the resulting composites. In some embodiments, the ratio of protein to plasticizer is 4:1.

In addition to the self-crosslinking capability of protein, the reactive groups can be utilized to modify the proteins further to obtain desired mechanical and physical properties. The most common protein modifications include: addition of crosslinking agents and internal plasticizers, blending with other resins, and forming interpenetrating networks (IPN) with other crosslinked systems. These modifications are intended to improve the mechanical and physical properties of the resin. The properties of the resins can be further improved by adding nanoclay particles and micro- and nano-fibrillated cellulose (MFC, NFC), as described in, for example, Huang, X. and Netravali, A. N., "Characterization of flax yarn and flax fabric reinforced nano-clay modified soy protein resin composites," Compos. Sci. and Technol. 2007, 67, 2005; and Netravali, A. N.; Huang, X.; and Mizuta, K., "Advanced Green Composites," Advanced Composite Materials 2007, 16, 269.

In some embodiments, a protein is a plant-based protein. In some embodiments, a provided plant-based protein is obtained from a seed, stalk, fruit, root, husk, stover, leaf, stem, bulb, flower or algae, either naturally occurring or bioengineered. In some embodiments, the plant-based protein is soy protein.

Soy Protein. Soy protein has been modified in various ways and used as resin in the past, as described in, for example, Netravali, A. N. and Chabba, S., Materials Today, pp. 22-29, April 2003; Lodha, P. and Netravali, A. N., Indus. Crops and Prod. 2005, 21, 49; Chabba, S. and Netravali, A. N., J. Mater. Sci. 2005, 40, 6263; Chabba, S. and Netravali, A. N., J. Mater. Sci. 2005, 40, 6275; and Huang, X. and Netravali, A. N., Biomacromolecules, 2006, 7, 2783.

Soy protein useful in the present invention includes soy protein from commercially available soy protein sources. The protein content of the soy protein source is proportional to the resulting strength and rigidity of the composite boards because there is a concomitant increase in the crosslinking of the resin. In some embodiments, the soy protein source is treated to remove any carbohydrates, thereby increasing the protein levels of the soy source. In other embodiments, the soy protein source is not treated.

In some embodiments, the concentration of the soy protein in the soy protein source is about 90-95%. In other embodiments, the concentration of the soy protein in the soy protein source is about 70-89%. In still other embodiments, the concentration of the soy protein in the soy protein source is about 60-69%. In still other embodiments, the concentration of the soy protein in the soy protein source is about 45-59%.

In some embodiments, the soy protein source is soy protein isolate.

In some embodiments, the soy protein source is soy protein concentrate. In some embodiments, the soy protein concentrate is commercially available, for example, Arcon S^{®} or Arcon F^{®}, which may be obtained from Archer Daniels Midland.

In some embodiments, the soy protein source is soy flour.

Alternative Proteins. As described above, suitable protein for use in the present invention includes plant-based protein. In certain embodiments, the plant-based protein is other than a soy-based protein. In some embodiments, a provided plant-based protein is obtained from a seed, stalk, fruit, root, husk, stover, leaf, stem, algae, bulb or flower, either naturally occurring or bioengineered. In some embodiments, the plant-based protein obtained from seed is a canola or sunflower protein. In other embodiments, the plant-based protein obtained from grain is rye, wheat or corn protein. In still other embodiments, a plant-based protein is isolated from protein-producing algae.

In some embodiments, a protein suitable for use in the present invention includes animal-based protein, such as collagen, gelatin, casein, albumin, silk and elastin.

In some embodiments, a protein for use in the present invention includes protein produced by microorganisms. In some embodiments, such microorganisms include algae, bacteria and fungi, such as yeast.

In still other embodiments, a protein for use in the present invention includes biodiesel byproducts.

### Strengthening Agent

As described generally above, a provided resin includes a first strengthening agent. In one embodiment, the strengthening agent is a green polysaccharide. In another embodiment, the strengthening agent is a carboxylic acid. In yet another embodiment, the strengthening agent is a nanoclay. In yet another embodiment, the strengthening agent is a microfibrillated cellulose or nanofibrillated cellulose. In some embodiments, the weight ratio of soy protein to first strengthening agent in the biodegradable polymeric composition of the present invention is about 20:1 to about 1:1.

Green Polysaccharides. In one embodiment, the first strengthening agent is a green polysaccharide. In one embodiment, the strengthening agent is soluble (i.e., substantially soluble in water at a pH of about 7.0 or higher). In some embodiments, the green polysaccharide is a carboxy-containing polysaccharide. In another embodiment, the green polysaccharide is agar, gellan, or a mixture thereof.

Gellan gum is commercially available as Phytagel™ from Sigma-Aldrich Biotechnology. It is produced by bacterial fermentation and is composed of glucuronic acid, rhanmose and glucose, and is commonly used as a gelling agent for electrophoresis. Based on its chemistry, cured Phytagel™ is fully degradable. Gellan, a linear tetrasaccharide that contains glucuronic acid, glucose and rhamnose units, is known to form gels through ionic crosslinks at its glucuronic acid sites using divalent cations naturally present in most plant tissue and culture media. In the absence of divalent cations, higher concentration of gellan is also known to form strong gels via hydrogen bonding.

The mixing of gellan with soy protein isolate has been shown to result in improved mechanical properties. See, for example, Huang, X. and Netravali, A. N., Biomacromolecules, 2006, 7, 2783 and Lodha, P. and Netravali, A. N., Polymer Composites, 2005, 26, 647. During curing, crosslinking occurs in both the protein and in the polysaccharide, individually to form arrays of cured protein and arrays of polysaccharide. Intermingling occurs because the two arrays are mixed together. Hydrogen bonding occurs between the formed arrays of cured protein and cured polysaccharide because both arrays contain polar groups such as --COOH and -OH groups, and in the case of protein, -NH₂ groups.

In other embodiments, the green polysaccharide is selected from the group comprising carageenan, agar, gellan, agarose, alginic acid, ammonium alginate, annacardium occidentale gum, calcium alginate, carboxyl methyl-cellulose (CMC), carubin, chitosan acetate, chitosan lactate, E407a processed eucheuma seaweed, gelrite, guar gum, guaran, hydroxypropyl methylcellulose (HPMC), isabgol, locust bean gum, pectin, pluronic polyol F127, polyoses, potassium alginate, pullulan, sodium alginate, sodium carmellose, tragacanth, xanthan gum and mixtures thereof. In some embodiments, the polysaccharide may be extracted from seaweed and other aquatic plants. In some embodiments, the polysaccharide is agar agar.

Carboxylic acids and esters. In some embodiments, the first strengthening agent is a carboxylic acid or ester. Strengthening agents containing carboxylic acids or esters can crosslink with suitable groups on a protein. In some embodiments, the carboxylic acid or ester strengthening agent is selected from the group comprising caproic acids, caproic esters, castor bean oil, fish oil, lactic acids, lactic esters, poly L-lactic acid (PLLA) and polyols.

Other Polymers. In still other embodiments, the first strengthening agent is a polymer. In some embodiments, the polymer is a biopolymer. In one embodiment, the first strengthening agent is a polymer such as lignin. In other embodiments, the biopolymer is gelatin or another suitable protein gel.

Nanoclay. In some embodiments, the first strengthening agent is a clay. In other embodiments, the clay is a nanoclay. In some embodiments, a nanoclay has a dry particle size of 90% less than 15 microns. The composition can be characterized as green since the nanoclay particles are natural and simply become soil particles if disposed of or composted. The nanoclay does not take part in the crosslinking but is rather present as a reinforcing additive and filler. As used herein, the term "nanoclay" means clay having nanometer thickness silicate platelets. In some embodiments, a nanoclay is a natural clay such as montmorillonite. In other embodiments, a nanoclay is selected from the group comprising fluorohectorite, laponite, bentonite, beidellite, hectorite, saponite, nontronite, sauconite, vermiculite, ledikite, nagadiite, kenyaite and stevensite.

Cellulose. In some embodiments, the first strengthening agent is a cellulose. In some embodiments, a cellulose is a microfibrillated cellulose (MFC) or nanofibrillated cellulose (NFC). MFC is manufactured by separating (shearing) the cellulose fibrils from several different plant varieties. Further purification and shearing, produces nanofibrillated cellulose. The only difference between MFC and NFC is size (micrometer versus nanometer). The compositions are green because the MFC and NFC degrade in compost medium and in moist environments through microbial activity. Up to 60% MFC or NFC by weight (uncured protein plus green strengthening agent basis) improves the mechanical properties of the composition significantly. The MFC and NFC do not take part in any crosslinking but rather are present as strengthening additives or filler. However they are essentially uniformly dispersed in the biodegradable composition and, because of their size and aspect ratio, act as reinforcement.

It will be appreciated by those skilled in the art that the resin of the present invention also includes resins containing various combinations of strengthening agents. For example only, in one embodiment the resin composition comprises a protein from 98% to 20% by weight protein (uncured protein plus first strengthening agent basis) and from 2% to 80% by weight of first strengthening agent (uncured protein plus first strengthening agent basis) wherein the first strengthening agent consists of from 1.9% to 65% by weight cured green polysaccharide and from 0.1% to 15% by weight nanoclay (uncured protein plus nanoclay plus polysaccharide basis).

In another embodiment, the resin composition comprises a protein from 98% to 20% by weight protein (uncured protein plus first strengthening agent basis) and from 2% to 80% by weight of first strengthening agent (uncured protein plus first strengthening agent basis) wherein the first strengthening agent consists of from 0.1% to 79.9% by weight cured green polysaccharide and from 0.1% to 79.9% by weight microfibrillated or nanofibrillated cellulose (uncured protein plus polysaccharide plus MFC or NFC basis).

### Plasticizer

As described above, the resin containing a protein and a first strengthening agent optionally further comprises a plasticizer. Without wishing to be bound by any particular theory, it is believed that the addition of a plasticizer reduces the brittleness of the crosslinked protein, thereby increasing the strength and rigidity of the composite. In some embodiments, the weight ratio of plasticizer:(protein + first strengthening agent) is about 1:20 to about 1:4. Suitable plasticizers for use in the present invention include a hydrophilic or hydrophobic polyol. In some embodiments, a provided polyol is a C₁₋₃ polyol. In one embodiment, the C₁₋₃ polyol is glycerol. In other embodiments, a provided polyol is a C₄₋₇ polyol. In one embodiment, the C₄₋₇ polyol is sorbitol.

In still other embodiments, a plasticizer is selected from the group comprising environmentally safe phthalates diisononyl phthalate (DINP) and diisodecyl phthalate (DIDP), food additives such as acetylated monoglycerides alkyl citrates, triethyl citrate (TEC), acetyl triethyl citrate (ATEC), tributyl citrate (TBC), acetyl tributyl citrate (ATBC), trioctyl citrate (TOC), acetyl trioctyl citrate (ATOC), trihexyl citrate (THC), acetyl trihexyl citrate (ATHC), butyryl trihexyl citrate (BTHC), trimethyl citrate (TMC), alkyl sulfonic acid phenyl ester (ASE), lignosulfonates, beeswax, oils, sugars, polyols such as sorbitol and glycerol, low molecular weight polysaccharides or a combination thereof.

### Autimoisture Agent

A provided resin optionally further comprises an antimoisture agent which inhibits moisture absorption by the composite. The antimoisture agent may also optionally decrease any odors that result from the use of proteins. In some embodiments, an antimoisture agent is a wax or an oil. In other embodiments, an antimoisture agent is a plant-based wax or plant-based oil. In still other embodiments, an antimoisture agent is a petroleum-based wax or petroleum-based oil. In yet other embodiments, an antimoisture agent is an animal-based wax or animal-based oil.

In some embodiments, a plant-based antimoisture agent is selected from the group comprising carnauba wax, tea tree oil, soy wax, soy oil, lanolin, palm oil, palm wax, peanut oil, sunflower oil, rapeseed oil, canola oil, algae oil, coconut oil and carnauba oil.

In some embodiments, a petroleum-based antimoisture agent is selected from the group comprising paraffin wax, paraffin oil and mineral oil.

In some embodiments, an animal-based antimoisture agent is selected from the group comprising beeswax and whale oil.

### Antimicrobial Agent

In accordance with the present invention, the protein resin may optionally contain an antimicrobial agent. In some embodiments, an antimicrobial agent is an environmentally safe agent. In some embodiments, an antimicrobial agent is a guanidine polymer. In some embodiments, the guanidine polymer is Teflex®. In other embodiments, an antimicrobial agent is selected from the group comprising tea tree oil, parabens, paraben salts, quaternary ammonium salts, allylamines, echinocandins, polyene antimycotics, azoles, isothiazolinones, imidazolium, sodium silicates, sodium carbonate, sodium bicarbonate, potassium iodide, silver, copper, sulfur, grapefruit seed extract, lemon myrtle, olive leaf extract, patchouli, citronella oil, orange oil, pau d'arco and neem oil. In some embodiments, the parabens are selected from the group comprising methyl, ethyl, butyl, isobutyl, isopropyl and benzyl paraben and salts thereof. In some embodiments, the azoles are selected from the group comprising imidazoles, triazoles, thiazoles and benzimidazoles.

### COMPOSITES

A provided resin is useful for combination with green reinforcing materials to form a composite panel 10.

### Fiber

The present invention provides a composite 10, also referred to as composite panel, comprising at least one layer of a biodegradable polymeric composition 14, as described herein. The composition 14 is comprised of a protein, a first strengthening agent and an optional second strengthening agent of natural origin that can be a particulate material, a fiber, or a combination thereof. More precisely, the second strengthening agent of natural origin includes green reinforcing fiber, filament, yarn, and parallel arrays thereof, woven fabric, knitted fabric and/or nonwoven fabric of green polymer different from the protein, or a combination thereof.

In some embodiments, a second strengthening agent is a woven or nonwoven, scoured or unscoured natural fiber. In some embodiments, a natural scoured, nonwoven fiber is cellulose-based fiber. In other embodiments, a natural scoured, nonwoven fiber is animal-based fiber.

In some embodiments, a cellulose-based fiber is fiber obtained from a commercial supplier and available in a variety of packages, for example loose, baled, bagged, or boxed fiber. In other embodiments, the cellulose-based fiber is selected from the group comprising kenaf, hemp, flax, wool, silk, cotton, ramie, sorghum, raffia, sisal, jute, sugar cane bagasse, coconut, pineapple, abaca (banana), sunflower stalk, sunflower hull, peanut hull, wheat straw, oat straw, hula grass, henequin, corn stover, bamboo and saw dust. In other embodiments, a cellulose-based fiber is a recycled fiber from clothing, wood and paper products. In still other embodiments, the cellulose-based fiber is manure. In yet other embodiments, the cellulose-based fiber is regenerated cellulose fiber such as viscose rayon and lyocell.

In some embodiments, an animal-based fiber includes hair or fur, silk, fiber from feathers from a variety of fowl including chicken and turkey, and regenerated varieties such as spider silk and wool.

In some embodiments, a nonwoven fiber may be formed into a nonwoven mat 16.

In some embodiments, a nonwoven fiber is obtained from the supplier already scoured. In other embodiments, a nonwoven fiber is scoured to remove the natural lignins and pectins which coat the fiber. In still other embodiments, a nonwoven fiber is used without scouring.

In yet other embodiments, a fiber for use in the present invention is scoured or unscoured, woven fabric. In some embodiments, a woven fabric is selected from the group comprising burlap, linen or flax, wool, cotton, hemp, silk and rayon. In some embodiments, the woven fabric is burlap. In another embodiment, the woven fabric is a dyed burlap fabric. In still another embodiment, the woven fabric is an unscoured burlap fabric.

In still other embodiments, a fiber for use in the present invention is a combination of nonwoven fiber and woven fabric.

In some embodiments, the woven fabric is combined with a provided resin comprising a protein and a first strengthening agent and pressed into a composite as described herein, infra.

In certain embodiments, the composite 10 is comprised of a provided resin comprising a protein, a first strengthening agent and optionally a second strengthening agent, wherein the second strengthening agent is impregated with a provided resin to form a mat known as a prepreg. Two or more prepregs may be optionally stacked to achieve a desired thickness. Optionally, the prepregs are stacked or interlayered with one or more optionally impregnated woven fabrics, resulting in a stronger and more durable composite. In some embodiments, the prepregs are interlayered with optionally impregnated woven burlap. In some embodiments, the outer surfaces of the stack of prepregs are covered with decorative or aesthetic layers such as fabrics or veneers. In some embodiments, the fabrics are silkscreened to produce a customized composite. Significantly, the present invention further provides for a one-step process for pressing and veneering a composite without the use of a formaldehyde-based adhesive, as the resin itself crosslinks the prepregs with the veneer, resulting in a biodegradable veneered composite In other embodiments, the veneer is adhered to the composite with a suitable adhesive, for example wood glue.

Alternatively, the composite is comprised of a dry resin comprising a protein, a first strengthening agent and optionally a second strengthening agent, wherein the second strengthening agent is combined with the dry resin to form a resin/fiber complex, which may be optionally moistened with water before being subjected to conditions of temperature, humidity, and/or pressure sufficient to form a composite. Two or more resin/ fiber complexes may be optionally stacked or otherwise combined to achieve a desired thickness. Optionally, the resin/fiber complexes are stacked or interlayered with one or more optionally impregnated woven fabrics, resulting in a stronger and more durable composite. In some embodiments, the resin/ fiber structure complexes are interlayered with optionally impregnated woven burlap. In some embodiments, the outer surfaces of the stack of resin/ fiber complexes are covered with decorative or aesthetic layers such as fabrics or veneers. In some embodiments, the fabrics are silkscreened to produce a customized composite. Significantly, the present invention further provides for a one-step process for pressing and veneering a composite without the use of a formaldehyde-based adhesive, as the resin itself crosslinks the prepregs with the veneer, resulting in a biodegradable veneered composite. In other embodiments, the veneer is adhered to the composite with a suitable adhesive, for example wood glue.

In some embodiments, the stacked prepregs can be pressed directly into a mold, thereby resulting in a contoured composite. In a further embodiment, the prepregs can be both veneered and molded in a single step. Wood for a veneer ply includes but is not limited to any hardwood, softwood or bamboo. In some embodiments, the veneer is bamboo, pine, white maple, red maple, poplar, walnut, oak, redwood, birch, mahogany, ebony and cherry wood.

In some embodiments, the composites 10 can contain variable densities throughout a single board. In some embodiments, the variable density is created by a mold which is contoured, having a non-flat surface, on one surface but flat on the other, thereby applying variable pressure to the contoured surface. In other embodiments, the variable density is created by building up uneven layers of prepregs, where the more heavily layered areas, and thus, thickened areas, result in the more dense sections of the composite boards.

In some embodiments, the pressing of the prepregs contains a tooling step, which may occur before or after the pressing or curing step and prior to or after the release of the composite from the mold. In some embodiments, the tooling step occurs after the prepregs are loaded into the mold but prior to the pressing or curing step. Such step comprises subjecting the mold containing the prepregs to a tooling apparatus which trims the outer edges of the prepregs which, when pressed or cured, produce a composite without the need for further shaping or refining. In some embodiments, the prepreg material trimmed from the outside of the mold can be recycled by grinding up and adding the trimmings back into the resin.

In other embodiments, the tooling step occurs after the pressing or curing of the composite but before the composite is released from the mold.

### APPLICATIONS FOR BIODEGRADABLE COMPOSITES

As will be appreciated by those skilled in the art, composites 10 comprising biodegradable compositions are useful in the manufacture of consumer products. Consumer products composed of composites comprising biodegradable compositions are fire-retardant as compared to conventional materials such as wood and particle board. Of particular note, consumer products comprised of composites comprising biodegradable compositions, such as furniture, sports equipment and home decor, are renewable and compostable at the end of their useful life, thereby reducing landfill waste. Further, such composites comprising biodegradable compositions are produced without the use of formaldehyde or other toxic chemicals such as isocyanates or embodied in epoxies.

One application in accordance with the invention provides a vehicle panel comprising a provided composite. Of particular note, vehicle panels comprised of provided composites comprising biodegradable compositions are renewable and compostable at the end of their useful life, thereby reducing landfill waste. Further, as such provided composites comprising biodegradable compositions are produced without the use of formaldehyde or other toxic chemicals, they do not leech or emit formaldehyde into the environment.

In accordance with the present invention, a vehicle panel comprises a composite layer 10 comprising a biodegradable polymeric composition 14. In some embodiments, the vehicle panel optionally comprises areas of variable density. In some embodiments, a vehicle panel comprises a first area having a first density and a second area having a second density. Accordingly, in some embodiments, a vehicle panel of the present invention comprises at least two areas of different density. In some embodiments, a vehicle panel of the present invention comprises at least two areas of different density, wherein the neither surface of the area having lesser density is co-planar with the area of greater density. In some embodiments, a vehicle panel of the present invention comprises at least two areas of different density, wherein one surface of the area having lesser density is co-planar with the area of greater density, while the corresponding opposite surfaces are non-planar. In some embodiments, a vehicle panel is curved. In some embodiments, the vehicle panel of the present invention comprising at least two areas of different density is curved. In some embodiments, a vehicle panel is substantially straight. In some embodiments, a vehicle panel of the present invention comprising at least two areas of different density is substantially straight. In some embodiments, a vehicle panel comprises both straight edges and curved edges. In other embodiments, a vehicle panel comprises substantially straight edges. In still other embodiments, a vehicle panel comprises curved edges. In accordance with the present invention, a vehicle panel can optionally include a protrusion. In some embodiments, a vehicle panel can optionally include an opening. In some embodiments, the protrusion defines an opening. In some embodiments, a vehicle panel optionally comprises at least one protrusion. In some embodiments, a vehicle panel optionally comprises at least one opening. In some embodiments, a vehicle panel optionally comprises at least one opening and at least one protrusion. In some embodiments, the opening is a hole, an aperture, a gap, a cavity or a hollow place in a solid body. In some embodiments, the opening completely passes through the vehicle panel. In some embodiments, the opening partially passes through the vehicle panel. In some embodiments, the opening has a diameter ranging from about 0.125" to about 6". In some embodiments, the opening has a diameter of between 0.5" to about 3". In other embodiments, the opening has a diameter of between 3" and 5". In some embodiments, the opening has a diameter of between 5" and 12". In some embodiments, the opening has a diameter of between 12" and 36". In some embodiments, the opening is about the size of a rivet or a screw. In some embodiments, the opening is about the size of a handle. In some embodiments, the opening is about the size of a speaker. In some embodiments, the opening is about the size of a window. In some embodiments, the opening is about the size of a sunroof. In some embodiments, the opening is about the size of a tire, such as a spare tire. The opening can be defined by a cylindrical, square, triangular, rectangular, symmetrical or unsymmetrical polyhedron protrusion. In some embodiments, the vehicle panel is a door panel. In some embodiments, the vehicle panel is an interior door panel. In some such embodiments, an interior door panel is comprised of one composite sheet. In some embodiments, a door panel comprises an opening. In some such embodiments, said opening is about the size of a window. In some embodiments, the vehicle panel is a dashboard or console.

In some embodiments, the vehicle panel further comprises custom-molded openings or spaces for accessories such as speakers, door handles, windows, radios/CD/MP3 players, GPS or navigation systems, cup holders, storage compartments, air vents, climate control knobs or buttons, instrumentation or gauges displaying vehicle mechanical performance and/or measurements.

In some embodiments, the vehicle panel is a roof panel. In some embodiments, the roof panel further comprises an opening. In some such embodiments, said opening is about the size of a window, for example a sunroof.

In some embodiments, the vehicle panel is a floor panel.

In some embodiments, the vehicle panel is an exterior panel. In some embodiments, the exterior panel is a door panel or a roof panel.

In some embodiments, the present invention provides a method of manufacturing a vehicle panel comprising a composite comprising a biodegradable composition, wherein the method comprises the steps of: (i) stacking one or more prepregs between two tooling elements; and (ii) applying pressure to the tooling elements sufficient to form the composite.

In some embodiments, a method of manufacturing a vehicle panel comprising a composite comprising a biodegradable composition, wherein the method comprises the steps of: (i) stacking one or more prepregs between two tooling elements; and (ii) applying pressure to the tooling elements sufficient to form the composite, wherein the distance between the tooling elements is non-constant across the opposing surfaces.

In some embodiments, the present invention provides a method of manufacturing a vehicle panel comprising a composite comprising a biodegradable composition, wherein the method comprises the steps of: (i) stacking one or more prepregs between two tooling elements; and (ii) applying pressure to the tooling elements sufficient to form a composite having a first area characterized by a first density and a second area characterized by a second density.

In other embodiments, composites comprising biodegradable compositions are incorporated into furniture. In some embodiments, the furniture may include tables, desks, chairs, shelving, buffets, wet bars, benches, chests, vanities, stools, dressers, bed frames, futon frames, baby cribs, entertainment stands, bookcases, etc. In some embodiments, the furniture may include couches and recliners containing frames comprised of composites comprising biodegradable composition. In some embodiments, the furniture may be office furniture, such as cubicle walls. In some embodiments, the cubicle walls have variable densities to accommodate push pins. The cubicle walls may also contain a plurality of channels within which wires and cables may be concealed. In other embodiments, the office furniture may be desks, chairs or shelving. In some embodiments, the composites are customized with inlays, logos, colors, designs, etc.

In some embodiments, composites comprising biodegradable compositions are used to create home decor products. Such home decor products include picture frames, wall coverings, cabinets and cabinet doors, decorative tables, serving trays and platters, trivets, placemats, decorative screens, decorative boxes, corkboards, etc. In some embodiments, the composites are customized with inlays, logos, colors, designs, etc.

In some embodiments, composites comprising biodegradable compositions are useful in the manufacturing of tools and industrial equipment, including ladders, tool handles such as hammer, knife or broom handles, saw horses, etc.

In some embodiments, composites comprising biodegradable compositions are useful in the manufacturing of musical instruments, including guitars, pianos, harpsichords, violins, cellos, bass, harps, violas, banjos, lutes, mandolins and musical bows.

In some embodiments, composites comprising biodegradable compositions are useful in the manufacturing of caskets or coffins. Of particular note, it will be appreciated that the casket will be engineered to biodegrade at the same or slightly slower rate than its contents. In some embodiments, the caskets are veneered during the molding/pressing process.

In some embodiments, composites comprising biodegradable compositions are useful in the manufacturing of sports equipment. Such sports equipment includes skateboards, snowboards, snow skis, tennis racquets, golf clubs, bicycles, scooters, shoulder, elbow and knee pads, basketball backboards, lacrosse sticks, hockey sticks, skim boards, wakeboards, water-skis, boogie boards, surf boards, wake skates, snow skates, snow shoes, etc. In some embodiments, the composites are customized with inlays, logos, colors, designs, etc.

In other embodiments, composites comprising biodegradable compositions are useful in the manufacturing of product casing, packaging and mass-volume disposable consumer goods.

In some embodiments, composites comprising biodegradable compositions are useful in the manufacturing of building materials.

In other embodiments, composites comprising biodegradable compositions are useful in the manufacturing of automobile, airplane, train, bicycle or space vehicle parts.

### GENERAL PROCESS FOR PREPARING PROVIDED COMPOSITES

In preparing a resin of the present invention, the first strengthening agent is dissolved in water to form a solution or weak gel, depending on the concentration of the first strengthening agent, and optionally an antimoisture agent, an antimicrobial agent, and an additional strengthening agent is also added. The resulting solution or gel is added to the initial protein suspension, with or without a plasticizer, under conditions effective to cause dissolution of all ingredients to produce an aqueous resin comprising a biodegradable polymeric composition.

The aqueous resin mixture so produced is allowed to impregnate fiber structures, which are then optionally dried to produce prepregs as previously described. The prepregs are optionally stacked or otherwise combined to a desired thickness before being subjected to conditions of temperature and/or pressure sufficient to form a composite.

In some embodiments, the resin is optionally dried to a powder. In some embodiments, the resin is spray dried. In other embodiments, the resin is freeze-dried. In still other embodiments, the resin is dried in ambient air. In yet other embodiments, the resin is drum dried.

The dry resin so produced is then optionally combined with a second strengthening agent, consisting of woven or nonwoven fibers. The process of impregnation optionally includes a wetting agent, which assures good contact between the dry resin system and the fiber surface. Wetting agents can decrease the duration of impregnation process and result in a more thoroughly impregnated fiber/resin complex. The resin/fiber complex is optionally moistened with a suitable wetting agent, selected from the group comprising propylene glycol, alkylphenol ethoxylates (APEs), Epolene E-43, lauric-acid containing oils such as coconut, Cuphea, Vernonia, and palm kernel oils, ionic and non-ionic surfactants such as sodium dodecylsulfate and polysorbate 80, soy-based emulsifiers such as epoxidized soybean oil and epoxidized fatty acids, soybean oil, linseed oil, castor oil, silane dispersing agents such as Z-6070, polylactic acids such as ethoxylated alcohols UNITHOX™ 480 and UNITHOX™ 750 and acid amide ethoxylates UNICID™, available from Petrolite Corporation, ethoxylated fluorol compounds such as zonyl FSM by Dupont, Inc., ethoxylated alkyl phenols and alkylaryl polyethers, C₁₂-C₂₅ carboxylic acids such as lauric acid, oleic acid, palmitic acid or stearic acid, sorbitan C₁₂-C₂₅ carboxylates such as sorbitan monolaurate, sorbitan monopalmitate, sorbitan monostearate, sorbitan tristearate, sorbitan monooleate or sorbitan trioleate, Gemini surfactants, zinc stearate, high-molecular weight wetting agents such as DISPERBYK-106, DISPERBYK-107 and DISPERBYK-108, available from BYK USA, hyper-branched polymers such as Starfactant™, available from Cognis Corporation, amino acid-glycerol ethers, surfactants such as Consamine CA, ConsamineCW, Consamine DSNT, ConsamineDVS, Consamine JDA, Consamine JNF, Consamine NF, Consamine PA, Consamine X, and Consowet DY, available from Consos, Inc., waxes such as Luwax PE and montan waxes, Busperse 47, available from Buckman Laboratories, non-ionic or anionic wetting agents such as TR041, TR251 and TR255, available from Struktol Company of America, Hydropalat® 120, Igepal CO 630, available from Stepan, Polytergent B-300, available from Harcros Chemical, Triton X-100, available from Union Carbide, alkylated silicone siloxane copolymers such as BYK A-525 and BYK W-980, available from Byk-Chemie, neoalkoxy zirconate and neoalkoxy titanate coupling agents such as Ken React LZ-37, Ken React LZ-97 and LICA 44, available from Kenrich Petrochemicals, Inc., copolyacrylates such as Perenol F-40, available from Henkel Corporation, bis(hexamethylene)triamine, Pave 192, available from Morton International, decyl alcohol ethoxylates such as DeTHOX DA-4 and DeTHOX DA-6, available from DeForest, Inc., sodium dioctyl sulfosuccinate, Igepal CO-430, available from GAF Corp., dispersion aids such as Z-6173, available from Dow Corning Corp, and fatty acids and low molecular weight linear aliphatic polyesters such as polycaprolactone, polyalkanoates and polylactic acid.

Following impregnation, the fiber/resin complex may be optionally cut to desired size and shape. The resin/fiber complex is then formed into a sheet that when cured, either by applying heat or a combination of heat and pressure, will form a layer. To obtain thicker composite sheets, a plurality of sheets can be stacked for curing. The sheets can be stacked with unidirectional fibers and yarns at different angles in different layers.

In some embodiments, the dry resin is reconstituted with water prior to impregnating a fiber or fabric. In other embodiments, the dry resin is applied directly to a dry fiber or fabric. In still other embodiments, the dry resin is applied to dry fiber or fabric and a minimal amount of water is added to facilitate the curing step.

### Corrugated Panels

Corrugated panels consist of two parallel surfaces with a zig-zag web of material linking them. The process for creating these panels forms the material around a set of trapezoidal fingers. Specifically, one prepreg layer is placed on a flat, heated platen. A set of parallel trapezoidal fingers is placed on top of the first prepreg. Another prepreg is set on top of the first set of fingers. The second set of fingers are then placed on top of the previous prepreg. This second set of fingers alternates with the bottom set, allowing the prepreg in between the fingers to form the zig-zag web connecting the outer prepregs. A final prepreg is placed on top of the second set of fingers. Finally, the top heated platen is placed on top of the uppermost prepreg. This layup is subjected to temperature and pressure as defined above. During pressing, the tops of the first set of fingers align with the bottoms of the second set, and vice versa. Once the part has cured, the fingers are pulled out from the side (normal to the edge of the final part) and the part is complete.

### Composites with Varying Densities

Subjecting different areas of a part to higher or lower pressures during curing creates variable density parts. This difference in pressure can be accomplished several ways. The first method involves varying the distance between tooling elements while keeping the prepreg material thickness constant. Less distance between tooling elements translates into higher densities and thinner cross sections in the finished part. The second method for creating variable densities involves varying the amount of prepreg material that is placed in the tooling mold. If the material is doubled in one area of the mold, for a constant distance between tooling elements, the finished part will have twice the density where the additional material was placed. These two methods of varying the density can be combined to create variations in both density and thickness.

In addition to varying the thickness, the tooling elements can be used to make cutouts or holes in the finished part. These features are created by simply closing the distance between tooling elements to zero as the two halves of the mold are brought together.

The resin comprising a protein and a first strengthening agent, and further optionally comprising an antimoisture agent, an antimicrobial agent, and an additional strengthening agent is then optionally allowed to impregnate a second strengthening agent, consisting of woven or nonwoven fibers. The impregnated fiber structure is optionally allowed to dry, and may be optionally cut to desired size and shape. The impregnated fiber structure is then formed into a sheet of resin-impregnated biodegradable, renewable natural fiber that when cured, either by applying heat or heat and pressure will form a layer. To obtain thicker composite sheets, a plurality of sheets can be stacked for curing. The sheets can be stacked with unidirectional fibers and yarns at different angles in different layers.

### EXEMPLIFICATION

A biodegradable resin in accordance with the present invention may be prepared by the following illustrative procedure:

### Example 1

The agar mixture was prepared in a separate container by mixing an appropriate amount of agar with an appropriate amount of water at or below room temperature.

A 50L mixing kettle was charged with 25L water and heated to about 50 °C to about 85 °C. Half of the appropriate amount of protein was added and the pH of the mixture of adjusted to about 7-14 with a suitable base, for example a 1N sodium hydroxide solution. To the resulting mixture were added Teflex^{®} and sorbitol, followed by the preformed agar mixture. The remainder of the protein was then added and a sufficient volume of water added to the mixture to bring the total volume to about 55L. The mixture was allowed to stir at about 70 °C to about 90 °C for 30-60 minutes. The beeswax was then added and the resin mixture was allowed to stir at about 70 °C to about 90 °C for about 10-30 minutes.

The resin solution so produced was applied to a fiber structure such as a mat or sheet in an amount so as to thoroughly impregnate the structure and coat its surfaces. The fiber mat was subjected to the resin in the impregger for about 5 minutes, before being loosely rolled and allowed to stand for about 0-5 hours. The resin-impregnated mat was then optionally resubjected to the resin by additional passes through the impregger, before being loosely rolled and optionally allowed to stand for about 0-5 hours. In some embodiments, the prepreg is processed without a standing or resting step, for example in a high-throughput process utilizing continuously moving machinery such as a conveyor belt.

The fiber structure so treated was pre-cured by drying, for example, in an oven, at a temperature of about 35-70 °C to form what is referred to as a prepreg. In another embodiment, the prepreg is dried using steam heat. In yet another embodiment, the prepreg is dried using microwave technology. In yet another embodiment, the prepreg is dried using infrared technology. Alternatively, the structure is dried on one or more drying racks at room temperature or at outdoor temperature.

Once dry, the resin-impregnated mats were conditioned or equilibrated to a uniform dryness. In some embodiments, the mats were conditioned for about 0-7 days. Once conditioned, the prepreg has a moisture content of between 2 and 40 percent. In some embodiments, the moisture content of the dried prepreg is between about 5 and 15 percent. In other embodiments, the moisture content of the dried prepreg is between about 5 and 10 percent.

The layered prepregs and optional decorative coverings were pressed at a temperature of about 110 °C to about 140 °C and pressure of about 0.001-200 tons per square foot. The strength and density of the resulting composites are proportional to the pressure applied to the prepregs. Thus, when a low density composite is required, little to no pressure is applied.

### Example 2

Medium and high loft nonwoven sheets, as described above, were prepegged at 25% and 50% resin content, respectively, and allowed to dry to below 8% moisture content. Then, the respective prepregs were then pressed, such as described above, using both uniform and varied pressures to form the desired configuration of the resulting composite panel upon curing.

### Example 3

A high loft nonwoven sheet, as described above, was prepegged at 50% resin content and allowed to dry to below 8% moisture content. Then, the sheet was cut to form 4 equal sized layers, wherein the layers were stacked and pressed at a uniform pressure of 50 tons/ft² for 13 minutes at 125 degrees Celsius to form a resulting composite panel. In addition, another composite panel was formed, wherein positive stops were placed in the press to add 0.0625" to the previous composite panel, thereby providing an increased loft, less dense composite panel. Further, yet another composite panel was formed, wherein the positive stops were provided to add 0.125" to the original 4 layered composite panel, further yet decreasing the density of the composite panel. The stops were used in the formation of both 25% and 50% by weight resin content of the respective medium and high loft nonwoven sheet 12 to produce a rigid composite panel, wherein the resulting composite panels can be formed in any shape and size, with varying sizes and shapes of peripheral edges. Further, the composite panels can also be molded/formed having undulating surfaces, or otherwise.

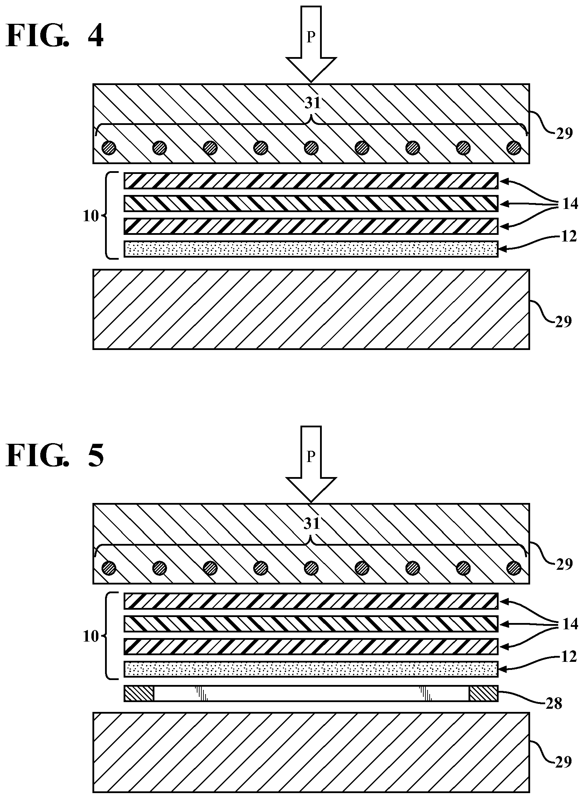

As shown in Figure 4, another composite panel 10 was constructed by pressing at least one nonwoven sheet 12 with at least one, and shown as a plurality of biodegradable polymeric composition sheets 14 (comprising about 53% resin and 47% bleached kenaf fiber, by way of example and without limitation), shown as three, by way of example and without limitation. The respective sheets 12, 14 were pressed between opposing press members 29 under a constant, uniform pressure (P) of 50 tons/ft² for about 13 minutes and heated via heating elements 31 at about 125 degrees Celsius to form a resulting composite panel 10. Thereafter, the compressed and bonded sheets 12, 14 can be cut and/or molded/formed as desired for the intended application.

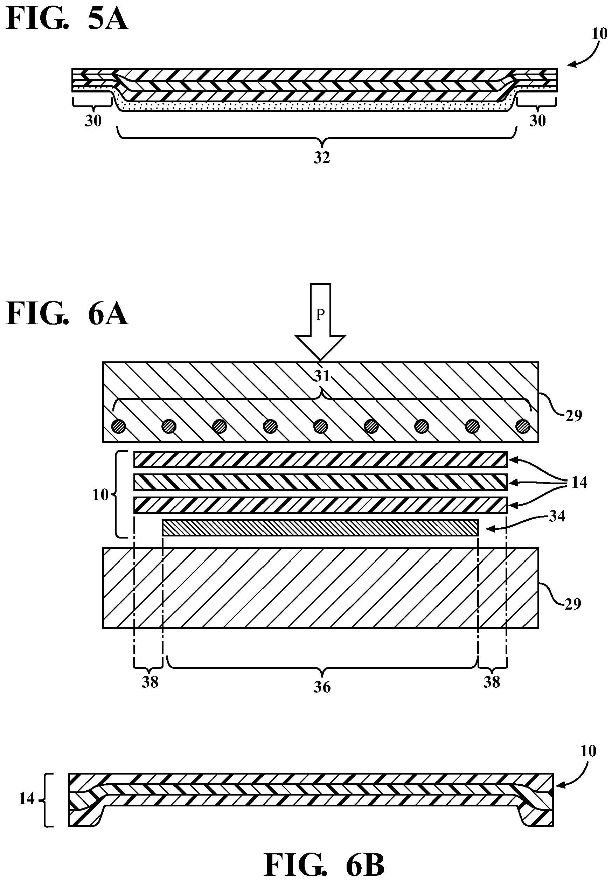

As shown in Figure 5A, another composite panel 10 was constructed by pressing at least one nonwoven sheet 12 with at least one, and shown as a plurality of biodegradable polymeric composition sheets 14, shown in Figure 5 as three, by way of example and without limitation, via a single stage press process. In addition to placing the respective sheets 12, 14 between the opposing press members, a frame member 28 was inserted between the opposing press members 29 to register with a periphery of the at least one of the sheets 12, 14, shown here, by way of example, as registering with the outer periphery of the nonwoven sheet 12. The frame member 28 was constructed as a generally square frame from 1" square aluminum, for example. As such, while applying the press force to the sheets 12, 14, a variable pressure is applied across the sheets 12, 14, with an increased pressure being applied across the outer periphery of the sheets 12, 14 as a result of the frame member 28, and a reduced pressure being applied to the sheets 12, 14 radially inwardly of the frame member 28. Accordingly, a high density outer periphery 30 is formed in the compressed sheets 12, 14 in the outer periphery region abutting the frame member 28, while a relatively decreased density region 32 is formed in the central region of the sheets 12, 14 radially inwardly from the frame member 28 (Figure 5A). Thus, the compacted high density region 30 (approximately 0.2" thick in the sample produced) provides a hard, rigid, strong outer peripheral portion 30, while the inner protruding decreased density region 32 (approximately 1.2" thick in the sample produced) provides a soft, sound absorbent, insulation region 32. The respective sheets 12, 14 were pressed under pressure of 50 tons/ft² for about 13 minutes at about 125 degrees Celsius to form the resulting composite panel 10. Thereafter, the panel 10 can be cut and/or molded/formed as desired for the intended application.

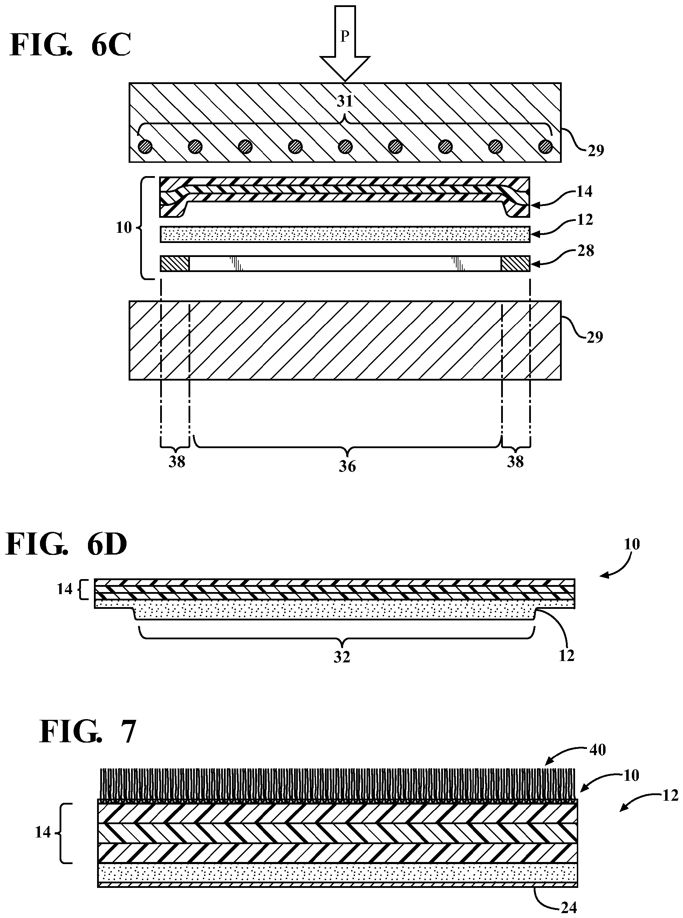

As shown in Figure 6D, another composite panel 10 was constructed by pressing at least one nonwoven sheet 12 with at least one, and shown as a plurality of biodegradable polymeric composition sheets 14, illustrated as three, by way of example and without limitation, via a dual stage press process. In the first stage (Figure 6A) of the dual stage process, the biodegradable polymeric composition sheets 14 and a frame member 34 were placed between opposing press members 29. Unlike the previous embodiment, the frame member 34 is configured to register across a central inner region 36 of the sheets 14, with an outer periphery 38 of the sheets 14 extending laterally outwardly from the frame member 34. The frame member 34 was provided as a solid square piece of aluminum, by way of example and without limitation. As such, while applying the press force (P) to the sheets 14, a variable pressure was applied to the sheets 14, with an increased pressure being applied across the central region 36 of the stacked sheets 14 as a result of the frame member 34, and a reduced pressure or no pressure being applied to the outer periphery region 38 of the sheets 14 radially outwardly from the frame member 34. Accordingly, a high density region is formed in the compressed sheets 14 across the entire central region 36 registered with the frame member 34, while a relatively decreased density, uncompressed or largely uncompressed region is remains in the outer periphery region 38 of the sheets 14 radially outwardly from the frame member 34. Then, in accordance with a further aspect of the invention, the pressed and bonded sheets 14 were placed in a second stage press along with a nonwoven sheet 12 and a peripherally extending frame member 28 (Figure 6C). The frame member 28, generally the same as discussed in the previous embodiment, and thus identified with the same reference numeral, is configured to register with the uncompressed outer periphery region 38 of the compressed and bonded sheets 14, with the nonwoven layer 12 being disposed between the frame member 28 and the bonded sheets 14 such that the frame member 28 is configured to register with the uncompressed outer periphery 38 and an outer periphery of the nonwoven layer 12. Then, the sheets 12, 14 are compressed between the press members 29 under a pressure (P) of about 700psi for 13 minutes at 125 degrees Celsius to form the resulting composite panel 10 (Figure 6D). Thereafter, the compressed, bonded composite 10 can be cut and/or molded/formed as desired for the intended application. The resulting composite panel 10 is strong and dense both along its outer periphery region 38 where the aluminum frame member 28 was pressed against the material of the layers 12, 14 and also in the central region 36 bounded by the outer periphery 38 where the aluminum frame member 34 was pressed against the layers 14 during the first press stage. The sheets 14, having been compressed both over the central region 36 and the outer periphery region 38 have a uniform or substantially uniform thickness and density in addition to having an increased strength due to being compressed. Further, as a result of the central region of the nonwoven layer 12 remaining free from compression by the peripheral frame member 28, the composite panel 10 has a high loft, soft, sound absorbent central region 32 where the nonwoven layer 12 remains completely or substantially uncompressed.

### Example 4

In accordance with another aspect of the invention, as shown in Figure 7, another composite member 10 constructed in accordance with the invention is illustrated. The composite 10 includes a lamination of bonded layers, including; carpet 40, a structural layer and a insulation layer, is provided. The biodegradable polymeric composition sheet 14 and nonwoven layer 12 provide the structural layer and the insulation layer, respectively. It has been discovered that complex, nonplanar shapes can be readily formed by first bonding a layer of the carpet 40 to the layers 12, 14, and then forming the bonded layers, including the carpet and the layers 12, 14, into their complex 3-D configuration. The carpet 40 can be bonded via the resinous layer 14 directly via heat and pressure and without the aid of supplemental adhesives, though supplemental adhesives, e.g. glue, bicomponent fibers, low melt fibers, could be used, if desired.

Obviously, many modifications and variations of the present invention are possible in light of the above teachings. It is, therefore, to be understood that within the scope of the appended claims, the invention may be practiced otherwise than as specifically described.

## Claims

1. A composite member (10), comprising:
at least one nonwoven mat (12, 16) including cardboard (18) and heat bondable textile fibers (20);
**characterised in that** at least one sheet (14) of biodegradable polymeric composition is bonded to said at least one nonwoven mat, said at least one sheet (14) of biodegradable polymeric composition including a protein and a first strengthening agent.

2. The composite member of claim 1 wherein said at least nonwoven mat (12, 16) is bonded to said at least one sheet (14) of biodegradable polymeric composition without an intermediate adhesive.

3. The composite member of claim 1 wherein said protein is a plant-based protein selected from the group consisting of: soya, canola, sunflower, rye, wheat or corn protein.

4. The composite member of claim 1 wherein said protein is an animal-based protein, such as collagen, gelatin, casein, albumin, silk or elastin, or a protein produced by microorganisms, namely algae, fungi or bacteria.

5. The composite member of claim 1 wherein said strengthening agent is a polysaccharide selected from the group comprising carrageenan, agar, gellan, agarose, alginic acid, ammonium alginate, annacardium occidentale gum, calcium alginate, carboxyl methyl-cellulose (CMC), carubin, chitosan acetate, chitosan lactate, E407a processed eucheuma seaweed, gelrite, guar gum, guaran, hydroxypropyl methylcellulose (HPMC), isabgol, locust bean gum, pectin, pluronic polyol F127, polyoses, potassium alginate, pullulan, sodium alginate, sodium carmellose, tragacanth, xanthan gum, and mixtures thereof.

6. The composite member of claim 1 wherein said strengthening agent is a carboxylic acid or ester, or a biopolymer, such as lignin, or a nanoclay, or a microfibrillated cellulose (M FC) or nanofibrillated cellulose (N FC).

7. The composite member of claim 1 wherein said at least one nonwoven mat (12, 16) has opposite sides wherein said at least one sheet (14) of biodegradable polymeric composition is attached to one of said sides and further comprising a scrim layer (24) or a carpet layer (40) attached to the side opposite said biodegradable polymeric composition.

8. The composite member of claim 1 wherein said cardboard (18) is Asian cardboard.

9. The composite member of claim 1 wherein a chemical mixture, including a flame retardant, a biocide and a binder, are applied, dried and cured to at least one surface of said at least one nonwoven mat.

10. A method of constructing a composite panel, comprising:
comminuting cardboard into reduced size pieces of a predetermined size and combining the reduced sized pieces of cardboard with heat bondable textile fibers;
thermally bonding the pieces of cardboard with the heat bondable textile fibers to produce at least one nonwoven mat (12, 16) of a desired thickness;
preparing at least one biodegradable polymeric composition comprising a protein and a first strengthening agent; and
bonding the biodegradable polymeric composition to the nonwoven mat.

11. The method of claim 10 further including bonding the at least one nonwoven mat to the at least one biodegradable polymeric composition without using a separate intermediate adhesive.

12. The method of claim 10 further including laminating a scrim layer (24) to a side of the nonwoven mat (12, 16) opposite the biodegradable polymeric composition without using nip rolls and maintaining the thickness of the mat as initially produced.

13. The method of claim 10 further including mixing staple fibers with the cardboard pieces (18) and heat bondable textile fibers (20) to form a substantially homogenous mixture and then forming the nonwoven mat (12, 16) from the mixture.

14. The method of claim 10 further including applying a chemical mixture, including a flame retardant, a biocide and a binder, to at least one surface of the nonwoven mat (12, 16) and maintaining the thickness of the nonwoven mat as initially produced and then drying and curing the nonwoven mat.

## Patentansprüche

1. Verbundelement (10), umfassend:
mindestens eine Vliesstoffmatte (12, 16) enthaltend Karton (18) und wärmeverbindbare Textilfasern (20);
**dadurch gekennzeichnet, dass** mindestens ein Blatt (14) aus einer biologisch abbaubaren Polymerzusammensetzung an die mindestens eine Vliesstoffmatte gebunden wird, wobei das mindestens eine Blatt (14) aus einer biologisch abbaubaren Polymerzusammensetzung ein Protein und ein erstes Verfestigungsmittel enthält.

2. Verbundelement nach Anspruch 1, wobei die mindestens eine Vliesstoffmatte (12, 16) ohne einen zwischenliegenden Klebstoff an das mindestens eine Blatt (14) aus einer biologisch abbaubaren Polymerzusammensetzung gebunden wird.

3. Verbundelement nach Anspruch 1, wobei das Protein ein pflanzliches Protein ist, ausgewählt von der Gruppe bestehend aus: Soja-, Raps-, Sonnenblumen-, Roggen-, Weizen- oder Mais-Protein.

4. Verbundelement nach Anspruch 1, wobei das Protein ein tierisches Protein ist, wie z. B. Kollagen, Gelatin, Casein, Albumin, Seide oder Elastin, oder ein von Mikroorganismen erzeugtes Protein, nämlich Algen, Pilze oder Bakterien.

5. Verbundelement nach Anspruch 1, wobei das Verfestigungsmittel ein Polysaccharid ist, ausgewählt von der Gruppe umfassend Carrageenan, Agar, Gellan, Agarose, Alginsäure, Ammoniumalginat, Gummi von Anacardium occidentale, Kalziumalginat, Carboxylmethylzellulose (CMC), Carubin, Chitosanacetat, Chitosanlaktat, mit E407a verarbeitete Eucheuma-Algen, Gelrite, Guargummi, Guaran, Hydroxypropylmethylzellulose (HPMC), Isabgol, Johannisbrotkernmehl, Pectin, Pluronic-Polyol F127, Polyosen, Kaliumalginat, Pullulan, Natriumalginat, Natriumcarmellose, Traganth, Xanthangummi und Gemische davon.

6. Verbundelement nach Anspruch 1, wobei das Verfestigungsmittel eine Carboxylsäure oder Ester ist, oder ein Biopolymer, wie z. B. Lignin, oder ein Nanoton, oder eine mikrofibrillierte Zellulose (MFC) oder nanofibrillierte Zellulose (NFC).

7. Verbundelement nach Anspruch 1, wobei die mindestens eine Vliesstoffmatte (12, 16) gegenüberliegende Seiten hat, wobei das mindestens eine Blatt (14) aus einer biologisch abbaubaren Polymerzusammensetzung an einer der Seiten angebracht ist, und ferner umfassend eine Gitterstoffschicht (24) oder eine Deckschicht (40), die auf der Seite gegenüber der biologisch abbaubaren Polymerzusammensetzung angebracht ist.

8. Verbundelement nach Anspruch 1, wobei der Karton (18) Asien-Karton ist.

9. Verbundelement nach Anspruch 1, wobei ein chemisches Gemisch enthaltend einen Flammenhemmstoff, ein Biozid und einen Binder auf mindestens eine Oberfläche der mindestens einen Vliesstoffmatte angewendet, getrocknet und ausgehärtet wird.

10. Verfahren zum Herstellen einer Verbundplatte, umfassend:
Zerkleinern von Karton in Stücke reduzierter Größe einer vorbestimmten Größe und Kombinieren der Kartonstücke reduzierter Größe mit wärmeverbindbaren Textilfasern;
thermisches Binden der Kartonstücke mit den wärmeverbindbaren Textilfasern, um mindestens eine Vliesstoffmatte (12, 16) einer gewünschten Stärke zu erzeugen;
Vorbereiten mindestens einer biologisch abbaubaren Polymerzusammensetzung umfassend ein Protein und ein erstes Verfestigungsmittel; und
Binden der biologisch abbaubaren Polymerzusammensetzung an die Vliesstoffmatte.

11. Verfahren nach Anspruch 10 ferner enthaltend ein Binden der mindestens einen Vliesstoffmatte an die mindestens eine biologisch abbaubare Polymerzusammensetzung ohne Verwenden eines separaten zwischenliegenden Klebstoffs.

12. Verfahren nach Anspruch 10, ferner enthaltend ein Kaschieren einer Gitterstoffschicht (24) auf einer Seite der Vliesstoffmatte (12, 16) gegenüber der biologisch abbaubaren Polymerzusammensetzung ohne Verwenden von Anpressrollen und unter Beibehalten der Stärke der Matte, wie sie anfangs hergestellt wurde.

13. Verfahren nach Anspruch 10, ferner enthaltend ein Mischen von Stapelfasern mit den Kartonstücken (18) und wärmeverbindbaren Textilfasern (20), um ein im Wesentlichen homogenes Gemisch zu bilden, und dann Bilden der Vliesstoffmatte (12, 16) aus dem Gemisch.

14. Verfahren nach Anspruch 10, ferner enthaltend ein Anwenden eines chemischen Gemischs enthaltend einen Flammenhemmstoff, ein Biozid und einen Binder auf mindestens eine Oberfläche der Vliesstoffmatte (12, 16) und Beibehalten der Stärke der Vliesstoffmatte, wie sie anfangs hergestellt wurde, und dann ein Trocknen und Aushärten der Vliesstoffmatte.

## Revendications

1. Élément composite (10), comprenant :
au moins un tapis non tissé (12, 16) comprenant du carton (18) et des fibres textiles thermo-soudables (20) ;
**caractérisé en ce que** au moins une feuille (14) de composition polymère biodégradable est collée sur ledit au moins un tapis non tissé, ladite au moins une feuille (14) de composition polymère biodégradable comprenant une protéine et un premier agent de renforcement.

2. L'élément composite selon la revendication 1, ledit au moins un tapis non tissé (12, 16) étant collé sur ladite au moins une feuille (14) de composition polymère biodégradable sans un adhésif intermédiaire.

3. L'élément composite selon la revendication 1, ladite protéine étant une protéine végétale sélectionnée dans un groupe composé de : soja, canola, tournesol, seigle, blé ou protéine de maïs.

4. L'élément composite selon la revendication 1, ladite protéine étant une protéine animale, par exemple : collagène, gélatine, caséine, albumine, soie ou élastine, ou une protéine produite par des micro-organismes, à savoir des algues, des champignons ou des bactéries.

5. L'élément composite selon la revendication 1, ledit agent de renforcement étant un polysaccaride sélectionné dans un groupe comprenant : carragénine, agar, gellane, agarose, acide alginique, alginate d'ammonium, gomme occidentale d'anacardium, alginate de calcium, cellulose de carboxylméthyle, carubine, acétate de chitosane, lactate de chitosane, varech Eucheuma traité à l'E407a, gelrite, gomme de guar, guaran, hydroxypropyleméthylcellulose (HPMC), isabgol, gomme de fève locuste, pectine, polyalcool pluronique F127, polyoses, alginate de potassium, pullulane, alginate de sodium, carmellose sodique, tragacanthe, gomme xanthane, et des mélanges de ces derniers.

6. L'élément composite selon la revendication 1, ledit agent de renforcement étant un acide carboxylique ou ester, ou un bio-polymère, comme de la lignine, ou une nano-argile, ou une cellulose microfibrillée (M FC) ou une cellulose nanofibrillée (N FC).

7. L'élément composite selon la revendication 1, ledit au moins un tapis non tissé (12, 16) possédant des côtés opposés, ladite au moins une feuille (14) de composition polymère biodégradable étant fixée sur un desdits côtés, et comprenant en outre une couche canevas (24) ou une couche de tapis (40) fixée sur le côté opposé à ladite composition polymère biodégradable.

8. L'élément composite selon la revendication 1, ledit carton (18) étant du carton asiatique.

9. L'élément composite selon la revendication 1, un mélange chimique, comprenant un ignifugeant, un biocide et un liant, sont appliqués, séchés et durcis sur au moins une surface dudit au moins un tapis non tissé.

10. Méthode de construction d'un panneau composite, comprenant :
le broyage de carton en morceaux aux dimensions réduites d'une taille prédéterminée, et combinant les morceaux aux dimensions réduites de carton avec des fibres textiles thermo-soudables ;
le thermo-soudage des morceaux de carton avec des fibres textiles thermo-soudables pour produire au moins un tapis non tissé (12, 16) d'épaisseur désirée ;
la préparation d'au moins une composition polymère biodégradable comprenant une protéine et un premier agent de renforcement ; et
le soudage de la composition polymère biodégradable sur le tapis non tissé.

11. Méthode selon la revendication 10, comprenant en outre le soudage de l'au moins un tapis non tissé sur l'au moins une composition polymère biodégradable sans utilisation d'un adhésif intermédiaire distinct.

12. Méthode selon la revendication 10, comprenant en outre une couche canevas (24) sur un côté du tapis non tissé (12, 16) en face de la composition polymère biodégradable sans utiliser de rouleaux pinceurs, et en maintenant l'épaisseur du tapis tel que celui-ci a été produit initialement.

13. Méthode selon la revendication 10, comprenant en outre le mélange de fibres discontinues avec des morceaux de carton (18) et des fibres textiles thermo-soudables (20) pour former un mélange substantiellement homogène, puis en formant le tapis non tissé (12, 16) avec le mélange.

14. Méthode selon la revendication 10, comprenant en outre l'application d'un mélange chimique, y compris un ignifugeant, un biocide et un liant, sur au moins une surface du tapis non tissé (12, 16), et le maintien de l'épaisseur du tapis non tissé tel que celui-ci a été produit initialement, suivis du séchage puis du durcissement du tapis non tissé.
